# FASCICULE DE BREVET EUROPEEN

(11) **EP 3 559 641 B1**
(45) Date de publication et mention de la délivrance du brevet: **14.04.2021**
(21) Numéro de dépôt: 17808429.9
(22) Date de dépôt: 30.11.2017
(51) Int. Cl.: G01N 21/65, G01N 21/75, G01N 21/84

(54) **DISPOSITIF SIMPLIFIE DE DETECTION DE LA FORMATION D'HYDRATES DE GAZ**
VEREINFACHTE VORRICHTUNG ZUR ERKENNUNG DER BILDUNG VON GASHYDRATEN
SIMPLIFIED DEVICE FOR DETECTING THE FORMATION OF GAS HYDRATES

(30) Priorité: 21.12.2016 FR 1662981
(43) Date de publication de la demande: 30.10.2019
(73) Titulaire: IFP Energies nouvelles, 92852 Rueil-Malmaison (FR)
(72) Inventeur: DELPOUX, Olivier, 38500 Voiron (FR); FROT, Didier, 78100 Saint Germain en Laye (FR); SINQUIN, Anne, 95870 Bezons (FR); SAGNARD, Corinne, 01150 Blyes (FR)
(74) Mandataire: IFP Energies nouvelles
(86) Numéro de dépôt international: PCT/EP2017/080976
(87) Numéro de publication internationale: WO 2018/114269

(56) Documents cités:
- FR-A1- 2 984 504
- US-B1- 8 325 338
- REIKO KURIYAMA ET AL: "Two-wavelength Raman imaging for non-intrusive monitoring of transient temperature in microfluidic devices", MEASUREMENT SCIENCE AND TECHNOLOGY, IOP, BRISTOL, GB, vol. 25, no. 9, 24 juillet 2014 (2014-07-24), page 95203, XP020269346, ISSN: 0957-0233, DOI: 10.1088/0957-0233/25/9/095203 [extrait le 2014-07-24]
- XU XUE ET AL: "Detection of water-ice phase transition based on Raman spectrum", JOURNAL OF RAMAN SPECTROSCOPY, vol. 44, no. 7, 24 juillet 2013 (2013-07-24), pages 1045-1048, XP055367175, GB ISSN: 0377-0486, DOI: 10.1002/jrs.4310
- C.S.GARCIA ET AL.: "Remote pulsed laser Raman spectroscopy system for detecting water, ice, and hydrous minerals", SPIE, PO BOX 10 BELLINGHAM WA 98227-0010 USA, vol. 6302, 2006, pages 630215-1-630215-7, XP040228490,
- SCHICKS J M ET AL: "Raman spectra of gas hydrates-differences and analogies to ice 1h and (gas saturated) water", SPECTROCHIMICA ACTA. PART A: MOLECULAR AND BIOMOLECULAR SPECTROS, ELSEVIER, AMSTERDAM, NL, vol. 61, no. 10, 2005, pages 2399-2403, XP004982650, ISSN: 1386-1425, DOI: 10.1016/J.SAA.2005.02.019

## Description

La présente invention concerne le domaine technique de la production et du stockage de gaz naturel, et plus généralement de fluides essentiellement gazeux susceptibles de former des cristaux d'hydrates ou de clathrates dans une conduite.

L'invention concerne un dispositif simplifié pour mettre en œuvre une méthode optimisée permettant de détecter la présence ou la propension à la formation d'hydrates d'un gaz, ou d'hydrates d'un mélange de gaz, au sein d'un fluide essentiellement gazeux.

On connaît des cellules pour étudier la capacité d'un système formé de liquide et de gaz à former des hydrates de gaz. Dans des installations laboratoire, installations pilotes et/ou industrielles, la formation des hydrates de gaz est détectée soit par une augmentation de la température car la cristallisation est exothermique, soit, lorsque le dispositif de travail est respectivement fermé ou semi-fermé (permettant le maintien de la pression) par une chute de pression ou par une brusque consommation de gaz. Il est également possible de détecter la formation d'hydrates par examen visuel. Il faut souligner que dans la plupart de ces méthodes, il est nécessaire de former (ou de dissocier) un grand nombre de cristaux d'hydrates pour obtenir un signal significatif. Dans le cas de systèmes gazeux comprenant des faibles teneurs en eau, des cellules d'équilibre avec mesures de la teneur en eau par chromatographie gazeuse ou par coulométrie sont employées Un dispositif de détection d'hydrate de gaz est décrit dans FR2984504 A et un dispositif de détection de glace est décrit dans US8325338 B1.

Les hydrates de gaz sont des cristaux composés d'un réseau de molécules d'eau stabilisé par des formateurs d'hydrates (tels que du CO₂, de l'H₂S, de l'azote...). Les hydrates de gaz se forment dans des conditions de hautes pressions et à basses températures. Si ces cristaux se forment, ils croissent, s'agglomèrent et conduisent à un bouchage des canalisations. La remédiation de tels bouchages est longue, difficile et dangereuse. Actuellement, les opérateurs mettent en oeuvre des solutions techniques lourdes et coûteuses pour éviter la formation de ces cristaux.

Un des objectifs de la présente invention est de fournir un dispositif simplifié de mesure et de détection précoce de formation d'hydrates de gaz, rendant possible la mise en oeuvre de remédiation efficace vis-à-vis des problèmes d'hydrates.

La spectrométrie Raman est une technique non destructive et non invasive d'étude des vibrations de liaisons de molécules qui est, à l'heure actuelle, communément utilisée pour investiguer la structure et la composition d'hydrates de gaz naturel ou synthétique. En effet, il est connu que, dans le cas d'hydrates de gaz pur, la spectrométrie Raman permet d'identifier au travers des modes de vibrations des molécules hôtes, la structure de l'hydrate de gaz (de type SI, SII ou SH) et de déterminer quantitativement les occupations relatives des différents types de cavités de ces différents cristaux d'hydrates. Dans le cas d'hydrates mixtes (stabilisés par un mélange de gaz), la technique permet d'identifier qualitativement la structure de l'hydrate formé et la nature des molécules hôtes.

La spectrométrie Raman a déjà été utilisée comme un moyen d'étudier la formation d'eau solide.

La présente invention est fondée sur le fait que l'utilisation de spectres Raman dans la zone des modes de vibrations des liaisons OH d'un milieu contenant de l'eau susceptible de former des cristaux solides (tels que de la glace et/ou des hydrates), permet, avec la combinaison d'une mesure de la température, d'identifier la présence ou non de cristaux en mettant en œuvre un dispositif de mesure simplifié.

L'invention concerne un dispositif de détection de la présence d'hydrates de gaz ou de glace dans un milieu comprenant de l'eau susceptible de former des cristaux solides comme défini dans la revendication 1.

Selon un mode de réalisation de l'invention, le dispositif de détection comporte un interrupteur optique disposé pour conduire alternativement lesdits signaux filtrés sur un unique détecteur A.P.D.

Conformément à l'invention, lesdits deux filtres passe-bande sont déterminés pour extraire les intensités lumineuses correspondantes aux spectres Raman de deux modes de vibration des liaisons OH ayant respectivement des nombres d'onde situés à 3160 cm⁻¹ ± 40 cm⁻¹, et à 3400 ±150 cm⁻¹.

Selon une caractéristique, ladite valeur caractéristique correspond à l'intensité des signaux, ou à une valeur directement liée à l'intensité, par exemple l'intégrale dudit spectre centré sur lesdits modes de vibration.

Conformément à l'invention, lesdits moyens d'analyse effectuent un rapport **T** desdites deux valeurs caractéristiques.

Avantageusement, lesdits filtres sont deux filtres passe-bande centrés autour de 640 nm et 650 nm, afin de correspondre aux signaux Raman desdits deux modes de vibration des liaisons OH.

De manière avantageuse, ledit dispositif comporte des moyens de réglage de la température au voisinage dudit point de mesure.

En outre, l'invention concerne une utilisation du dispositif selon d'une des caractéristiques précédentes à la détection de présence d'hydrates ou de glace dans un effluent de production issu d'une exploitation d'hydrocarbures, dans laquelle on effectue préalablement une opération d'étalonnage dudit dispositif à partir d'un échantillon représentatif dudit effluent.

L'étalonnage détermine, pour au moins une température, un rapport de référence **T**₀, pour détecter la présence ou non de cristaux solides de glace ou d'hydrates.

De préférence, on déduit la présence de cristaux d'hydrates si le rapport **T** desdites valeurs caractéristiques desdits signaux filtrés est supérieur à une valeur d'étalonnage **T**₀ et si la température mesurée est supérieure à la température de formation de la glace Tf dans les conditions de mesure.

La présente invention sera mieux comprise et ses avantages apparaîtront plus clairement à la lecture de la description qui suit d'exemples de mise en œuvre, nullement limitatifs, et illustrés par les figures ci-après annexées, parmi lesquelles :
- les figures 1a et 1b montrent deux modes de réalisation du dispositif selon l'invention.
- la figure 2 montre des spectres en fonction de la température du milieu considéré, obtenus par le dispositif selon un mode de réalisation de l'invention,
- la figure 3 montre l'évolution du rapport **T** des aires des signaux de deux modes différents de vibrations des liaisons OH.

La présente invention peut être décrite comme un dispositif adapté à la mise en œuvre d'une méthode de détection des hydrates de gaz ou de glace fondée sur des informations obtenues par des spectres Raman et une mesure de température (par exemple au moyen d'une sonde de température).

Le dispositif de détection de la présence d'hydrates de gaz ou de glace selon l'invention comporte au moins :
- une source laser disposée pour irradier au moins un point de mesure dans un milieu comprenant de l'eau susceptible de former des cristaux solides (hydrates de gaz et/ou glace),
- au moins deux filtres passe-bande de caractéristiques optiques déterminées pour extraire les intensités lumineuses correspondantes aux spectres Raman de deux modes de vibration des liaisons OH : lesdits filtres étant disposés sur le signal réfléchi du point de mesure (en d'autres termes, la source laser émet un signal irradiant le point de mesure, ce signal est réfléchi par le point de mesure, ce signal réfléchi passe par les filtres passe-bande),
- au moins un détecteur APD (de l'anglais « avalanche photodiode » pour photodiode à avalanche) pour enregistrer les deux signaux filtrés par les deux filtres passe-bande (en d'autres termes les signaux filtrés sont dirigés vers le(s) détecteur(s) APD),
- au moins un moyen de mesure de la température au voisinage du point de mesure, et
- des moyens d'analyse de la présence ou non d'hydrates et/ou de glace au point de mesure, lesdits moyens d'analyse exploitant deux valeurs caractéristiques des signaux filtrés (par les filtres passe-bande) combinées à la mesure de température pour déterminer la présence ou non d'hydrates et/ou de glace (cristaux solides).

Le dispositif selon l'invention peut être considéré comme un « spectromètre Raman simplifié » en ce qu'il ne fournit pas de spectres Raman, mais des informations ou mesures, qui sont exploitées dans une méthode de détection des hydrates, comme s'ils provenaient de spectrométrie Raman. En effet, on a constaté que pour ce qui concerne la détection de cristaux solides de glace ou d'hydrates, on peut considérer dans la gamme spectrale des vibrations de liaisons OH uniquement deux modes : le mode de vibration de l'eau solide (hydrate ou glace), et le mode de vibration de l'eau libre.

Ainsi, l'invention fournit un dispositif qui donne au moins une « valeur caractéristique » pour chacun de ces deux modes. A l'aide de ces deux valeurs caractéristiques combinées à une mesure de température, les moyens d'analyse déduisent la présence ou non de cristaux solides de glace ou d'hydrates. Par « valeur caractéristique », on signifie l'intensité du signal, ou une valeur directement liée à l'intensité, par exemple l'intégrale dudit spectre centré sur lesdits modes de vibration.

On rappelle que la spectrométrie Raman est une méthode optique d'observation et de caractérisation de la composition moléculaire et la structure externe d'un matériau. La spectrométrie Raman exploite le phénomène physique selon lequel un milieu modifie légèrement la fréquence de la lumière y circulant. La spectroscopie Raman consiste à envoyer une lumière monochromatique sur l'échantillon et à analyser la lumière diffusée. Les informations obtenues par la mesure et l'analyse de ce décalage permettent de remonter à certaines propriétés du milieu, par la spectroscopie.

Le choix de la source laser et du détecteur APD est conditionné par la recherche de l'optimum en termes de rapport signal sur bruit dans la gamme spectrale des modes de vibrations des liaisons OH. Le choix des deux filtres passe-bande est également conditionné au choix de la longueur d'excitation afin de récupérer les intensités de diffusion Raman correspondant à deux modes de vibration pouvant correspondre à des nombres d'onde situés à 3160 ± 40 cm⁻¹ et à 3400 ± 150 cm⁻¹.

Un détecteur APD (photodiode à avalanche) est un composant électronique semblable aux photomultiplicateurs, qui exploite l'effet photoélectrique pour convertir la lumière en électricité. Les détecteurs APD sont employés pour détecter des intensités de lumière extrêmement faibles.

A proximité du point de mesure (également appelé point d'analyse) où le laser irradie l'échantillon, une sonde de température (par exemple un thermocouple ou au moyen d'une troisième fibre optique couplé à un moyen de mesure déporté ou tout autre moyen de mesure de température) est installée de manière à disposer simultanément pour la zone échantillon de la diffusion Raman et de sa température.

A chaque point de mesure est associée une mesure de température située au voisinage dudit point de mesure permettant de mesurer la température du fluide circulant dans ledit voisinage du point de mesure.

Selon un mode de réalisation de l'invention, le dispositif selon l'invention peut comprendre deux détecteurs APD. Chaque détecteur APD est disposé en sortie d'un filtre passe-bande pour enregistrer séparément et simultanément les deux signaux filtrés.

Alternativement, le dispositif de détection peut comprendre un seul détecteur APD pour mesurer les deux signaux issus des deux filtres passe-bande. Pour ce mode de réalisation, le dispositif de détection peut comprendre en outre un interrupteur optique placé entre les deux filtres et le détecteur APD. L'interrupteur permet de transférer, de manière alternative, un seul signal sur le détecteur APD.

Selon un mode de réalisation de l'invention, les deux données (spectres Raman et température) peuvent être envoyées vers des moyens d'analyse, notamment des moyens informatiques (par exemple un PC) contrôlant la chaîne analytique, en vue d'une exploitation de ces mesures.

Une méthode mathématique de décomposition spectrale peut être ensuite utilisée afin d'évaluer, après une soustraction de la ligne de base (méthode bien connue de l'homme de l'art), une valeur caractéristique pour chacun des deux modes de vibration des liaisons OH (appelés également modes de vibration de l'eau) suivants :
- un premier mode de vibration de l'eau (désigné ci-après mode A), tel que avec un nombre d'onde situé à 3160 cm⁻¹ +/- 40 cm⁻¹,
- et un second mode de vibration de l'eau (désigné ci-après mode B), tel que celui avec un nombre d'onde situé à 3400 +/-150 cm⁻¹.

Selon une mise en œuvre de l'invention, les deux filtres passe-bande sont déterminés pour extraire les intensités lumineuses correspondantes aux spectres Raman de ces deux modes de vibration des liaisons OH (un nombre d'onde situé à 3160 cm⁻¹ +/- 40 cm^{-1e} et nombre d'onde situé à 3400 +/-150 cm⁻¹).

Avantageusement, les deux filtres peuvent être des filtres passe-bande centrés sensiblement autour de 640 nm et 650 nm, afin de correspondre aux signaux Raman des deux mode de vibration des liaisons OH.

Par « valeur caractéristique », on signifie l'intensité du signal, ou une valeur directement liée à l'intensité, par exemple l'aire (obtenue par intégration du spectre sur des bandes correspondant aux deux modes de vibration de l'eau).

La position des bandes correspondant aux modes de vibration A et B peut être donnée en nombre d'onde (cm⁻¹) ou en longueur d'onde (nm). On rappelle que le nombre d'onde est une grandeur égale à l'inverse de la longueur d'onde. Cette position est toujours donnée en relatif (shift Raman) par rapport à la position du laser incident (la position des bandes exprimée en longueur d'onde dépend de la longueur d'onde du laser incident du spectroscope Raman).

Selon l'invention, une fois que les deux valeurs caractéristiques sont déterminées, les moyens d'analyse calculent un rapport **T** de ces deux valeurs caractéristiques. De préférence, le rapport correspond au rapport du premier mode de vibration de l'eau (mode A) par le deuxième mode de vibration de l'eau (mode B).

Le rapport **T** peut être ensuite comparé, par les moyens d'analyse, à des valeurs limites **T**₀ déterminées préalablement par étalonnage dans le milieu considéré. Les valeurs limites **T**₀ peuvent dépendre du milieu, de la température, de la pression, etc.. Le rapport **T**₀ peut dépendre de la température, d'où l'intérêt de recourir à une mesure de température couplée à la mesure Raman. Si **T** > **T**₀, alors le système contient de l'eau sous forme solide (hydrates ou glace). Si **T** < **T**₀, alors le système ne contient pas d'eau sous forme solide (hydrates ou glace). De plus, dans le cas **T** > **T**₀, si la température T mesurée à proximité dudit point de mesure est supérieure à la température Tf de formation de la glace dans les conditions de mesure, les moyens d'analyse peuvent distinguer entre une présence de glace ou une présence d'hydrates de gaz : si **T** > **T**₀ et T > Tf, alors les moyens d'analyse peuvent mettre en évidence la présence d'hydrates de gaz.

La température Tf dépend notamment du milieu comprenant de l'eau et de la pression. En particulier, la température Tf peut être plus élevée en présence d'additif.

Selon un exemple de réalisation de l'invention, le rapport **T**₀ peut être compris entre 0.8 et 1.2 pour la détection de la formation d'eau solide de glace ou d'hydrates dans un milieu comprenant du méthane.

L'opération d'étalonnage est possiblement réalisée à différentes températures, dans des conditions représentatives d'opérations industrielles du milieu comprenant de l'eau.

En résumé, à partir de la procédure d'étalonnage, de la mesure en ligne des modes de vibrations de l'eau par un dispositif simplifié et de la température T au voisinage du point de mesure, les moyens d'analyse déterminent une valeur limite permettant de statuer sur la formation ou non d'eau sous forme solide, notamment sous forme d'hydrates de gaz.

Selon une mise en œuvre de l'invention, des moyens de réglage de la température du milieu au niveau du point de mesure peuvent être adjoint de façon à pouvoir contrôler la température du milieu (en imposant une gamme de températures au niveau du point de mesure) afin d'anticiper la formation d'hydrates ou plus généralement d'eau sous forme solide. De préférence, les moyens de réglage de la température refroidissent la température du milieu au voisinage du point de mesure.

Selon un mode de réalisation de l'invention, si les moyens d'analyse détectent une formation d'hydrates ou de glace au niveau du point de mesure après refroidissement du milieu au niveau du point de mesure, il est possible d'éviter la formation d'hydrates au sein du milieu, en injectant un additif anti-hydrate dans le milieu comprenant de l'eau. Ainsi, il est possible d'anticiper la prévention d'hydrates dans le milieu comprenant de l'eau.

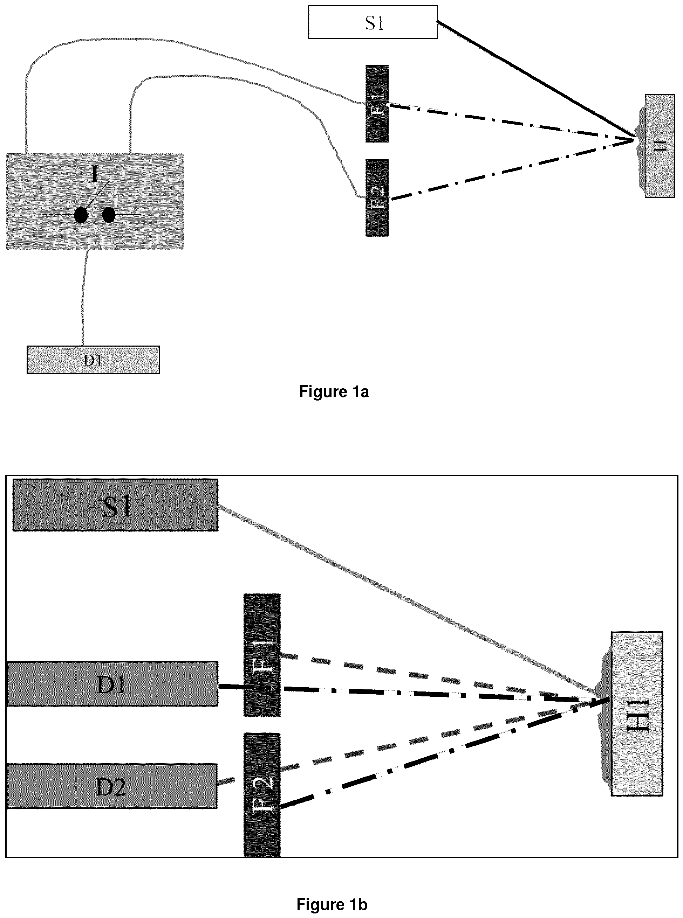

Les figures 1a et 1b illustrent, schématiquement et de manière non limitative, deux dispositifs de détection selon l'invention. Sur ces figures, le moyen de mesure de la température et les moyens d'analyse ne sont pas représentés.

La figure 1a montre schématiquement une mise en œuvre du dispositif, dans lequel une source laser (S1) irradie un point de mesure (H) qui renvoie un signal filtré par deux filtres optiques passe-bande (F1 et F2), les deux signaux filtrés étant enregistrés par un seul détecteur APD alternativement grâce à un interrupteur (I).

La figure 1b montre schématiquement une seconde mise en œuvre du dispositif, dans lequel une source laser (S1) irradie un point de mesure (H) qui renvoie un signal filtré par deux filtres optiques passe-bande (F1 et F2), les deux signaux filtrés étant enregistrés chacun par un détecteur APD (D1 et D2).

En outre, la méthode de détection des hydrates de gaz ou de glace au moyen du dispositif selon l'invention, peut comprendre les étapes suivantes :
- on envoie en au moins un point du milieu un signal lumineux laser dont la longueur d'onde est inférieure à 785 nm (réalisé par la source laser),
- on récupère les intensités lumineuses correspondant aux modes de vibrations A et B au point considéré à l'aide de deux filtres passe-bande et d'un ou plusieurs détecteurs APD,
- on traite les signaux selon la méthode décrite ci-dessus (en mesurant les valeurs caractéristiques pour les deux modes de vibration des liaisons OH), par les moyens d'analyse,
- on récupère à l'issue de ce traitement la valeur du rapport d'intensité ou des aires **T**, par les moyens d'analyse,
- on mesure la température T au voisinage du point de mesure,
- on compare la valeur du rapport **T** avec une valeur de référence **T**₀, par les moyens d'analyse,
- en fonction de l'écart entre la valeur mesurée **T** et la valeur de référence **T**₀, et en fonction de la température mesurée, on statue sur la présence ou non de cristaux solides de glace ou d'hydrates, par les moyens d'analyse.

En fonction de cette information, on peut agir sur au moins une variable d'action, par exemple la température, la pression, l'injection d'additif, ou le débit du fluide, pour éviter la formation d'hydrates (ou de glace) dans le milieu comprenant de l'eau.

Dans une variante, la température T au voisinage du point de mesure est contrôlée. On peut ajouter des moyens de réglage de la température qui visent à refroidir ledit point de mesure. La méthode permet alors d'anticiper une température de formation d'hydrates en conditions réelles.

### Exemple

Les caractéristiques et avantages de l'invention apparaîtront plus clairement à la lecture de l'exemple d'application ci-après. Dans cet exemple, le milieu est composé de méthane en phase gaz à une pression de 70 bar et d'une faible quantité d'eau dans une enceinte dans laquelle est placée une sonde de température et du dispositif selon l'une des Figures 1a ou 1b, avec une source laser possédant une longueur d'onde d'excitation à 532 nm (ou 18797 cm⁻¹). Les filtres choisis sont deux filtres passe-bande centrés à 640 nm (ou 15625 cm⁻¹) et 650 nm (ou 15385 cm⁻¹) afin d'extraire respectivement les intensités lumineuses ou les aires correspondant aux signaux Raman à 3412 cm⁻¹ (18797-15385) et 3172 cm⁻¹ (18797-15625)

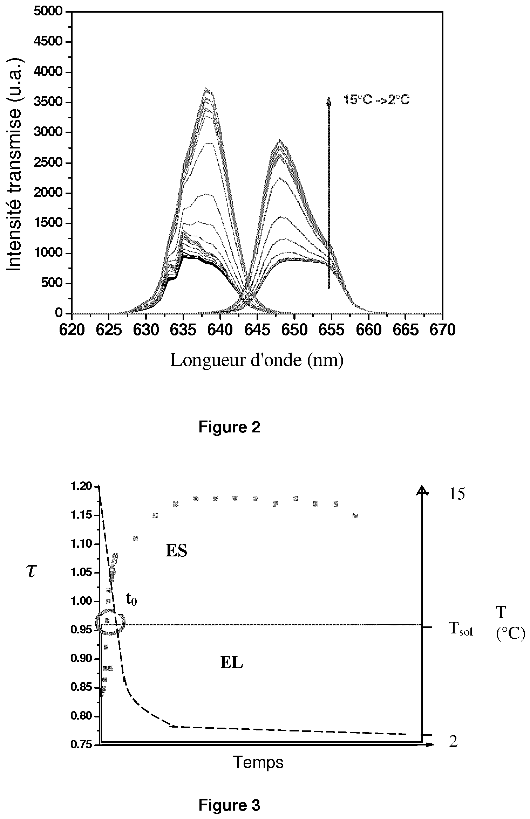

Les intensités lumineuses illustrés sur la figure 2 ont été enregistrés lors du refroidissement de l'enceinte entre 15°C et 2°C. Chaque courbe représentée correspond à une température de l'enceinte.

Dans cet exemple, les valeurs caractéristiques considérées sont les intégrales desdits spectres centrés sur lesdits modes de vibration.

On mesure les aires intégrées des deux massifs centrés à 640 nm et 650 nm récupérés par les deux détecteurs A.P.D. Les moyens d'analyse calculent ensuite le rapport **T** des deux aires (A(640)/A(650)) en fonction du temps (Figure 3) ou indifféremment en fonction de la température puisque la température est abaissée au cours du temps dans cet essai. Sur la figure 3, le rapport des intensités **T** est représenté par des carrés gris, et la variation de la température T en °C est illustrée par la courbe en pointillée. La comparaison des valeurs du rapport **T**, comprises ici entre environ 0.8 et 1,2, à une valeur **T**₀ de référence fixée ici à 1 suite à un étalonnage préalable, permet de statuer sur la présence d'eau sous forme solide. Dans la région **T** < **T**₀ (région EL sur la figure 3), le système ne contient pas d'eau sous forme solide. Dans la région **T** > **T**₀ (région ES sur la figure 3), le système contient de l'eau sous forme solide. On note tₛₒₗ le temps correspondant au passage d'une région à une autre, c'est-à-dire correspondant au moment où des cristaux solides se forment. La mesure de la température T à proximité du point de mesure des spectres Raman permet de convertir ce temps tₛₒₗ en une température Tₛₒₗ d'apparition des particules solides. Dans cet exemple, la température varie entre 15°C et 2°C, la température Tₛₒₗ d'apparition des particules solides est supérieure à la température de formation de la glace, ce qui permet de plus de conclure sur l'apparition de cristaux de type hydrates de gaz, plutôt que de type glace.

## Revendications

1. Dispositif de détection de la présence d'hydrates de gaz ou de glace dans un milieu comprenant de l'eau susceptible de former des cristaux solides, **caractérisé en ce qu'**il comporte au moins :
- une source laser (S1) disposée pour irradier au moins un point de mesure dans ledit milieu,
- au moins deux filtres passe-bande (F1, F2) de caractéristiques prédéterminées pour extraire les intensités lumineuses correspondantes aux spectres Raman de deux modes de vibration des liaisons OH, lesdits filtres étant disposés sur le signal réfléchi par ledit point de mesure, lesdits deux modes de vibration des liaisons OH ayant respectivement des nombres d'onde situés à 3160 cm⁻¹ ± 40 cm⁻¹, et à 3400 ±150 cm⁻¹ ,
- au moins un détecteur APD (D1, D2) pour enregistrer les deux signaux filtrés par lesdits filtres passe-bande (F1, F2),
- au moins un moyen de mesure de la température (T) audit point de mesure,
- des moyens d'analyse de la présence d'hydrates ou de glace audit point de mesure, lesdits moyens d'analyse exploitant deux valeurs caractéristiques desdits signaux filtrés combinées à ladite mesure de température pour déterminer la présence ou non de cristaux
d'hydrates ou de glace, lesdits moyens d'analyse étant configurés pour :
- effectuer un rapport **T** desdites deux valeurs caractéristiques ;
- effectuer une comparaison entre ledit rapport **T** et des valeurs limites **T**₀ déterminées par étalonnage ;
- déterminer la présence de cristaux d'hydrates ou la présence de glace à partir de ladite comparaison et d'une comparaison entre la température mesurée T audit point de mesure par ledit moyen de mesure et une température de la formation de la glace dans les conditions de mesure.

2. Dispositif selon la revendication 1, dans lequel le dispositif de détection comporte un interrupteur optique (I) disposé pour conduire alternativement lesdits signaux filtrés sur un unique détecteur A. P. D.

3. Dispositif selon l'une des revendications précédentes, dans lequel ladite valeur caractéristique correspond à l'intensité des signaux, ou à une valeur directement liée à l'intensité, par exemple l'intégrale dudit spectre centré sur lesdits modes de vibration.

4. Dispositif selon l'une des revendications précédentes, dans lequel lesdits filtres sont deux filtres passe-bande centrés autour de 640 nm et 650 nm, afin de correspondre aux signaux Raman desdits deux modes de vibration des liaisons OH.

5. Dispositif selon l'une des revendications précédentes, dans lequel ledit dispositif comporte des moyens de réglage de la température au voisinage dudit point de mesure.

6. Utilisation du dispositif selon d'une des revendications précédentes à la détection de présence d'hydrates ou de glace dans un effluent de production issue d'une exploitation d'hydrocarbures, dans laquelle on effectue préalablement une opération d'étalonnage dudit dispositif à partir d'un échantillon représentatif dudit effluent.

7. Utilisation selon la revendication 6, dans laquelle l'étalonnage détermine, pour au moins une température, un rapport de référence **T**₀, pour détecter la présence de cristaux solides de glace ou d'hydrates.

8. Utilisation selon la revendication 7, dans laquelle on déduit la présence de cristaux d'hydrates si le rapport **T** desdites valeurs caractéristiques desdits signaux filtrés est supérieur à une valeur d'étalonnage **T**₀ et si la température mesurée est supérieure à la température de formation de la glace Tf dans les conditions de mesure.

## Patentansprüche

1. Vorrichtung zur Erfassung des Vorhandenseins von Gashydraten oder von Eis in einem Medium, das Wasser enthält, das feste Kristalle bilden kann, **dadurch gekennzeichnet, dass** sie mindestens aufweist:
- eine Laserquelle (S1), die angeordnet ist, um mindestens einen Messpunkt in dem Medium zu bestrahlen,
- mindestens zwei Bandpassfilter (F1, F2) vorbestimmter Merkmale, um die Lichtstärken entsprechend den Raman-Spektren von zwei Schwingungsformen der OH-Verbindungen zu entnehmen, wobei die Filter auf dem vom Messpunkt reflektierten Signal angeordnet sind, wobei die zwei Schwingungsformen der OH-Verbindungen je Wellenzahlen haben, die sich bei 3160 cm⁻¹ ± 40 cm⁻¹ und bei 3400 ± 150 cm⁻¹ befinden,
- mindestens einen APD-Detektor (D1, D2), um die zwei von den Bandpassfiltern (F1, F2) gefilterten Signale zu speichern,
- mindestens eine Einrichtung zur Messung der Temperatur (T) am Messpunkt,
- Einrichtungen zur Analyse des Vorhandenseins von Hydraten oder von Eis am Messpunkt, wobei die Analyseeinrichtungen zwei charakteristische Werte der gefilterten Signale kombiniert mit der Temperaturmessung auswerten, um das Vorhandensein oder nicht von Hydratkristallen oder von Eis zu bestimmen, wobei die Analyseeinrichtungen konfiguriert sind:
- ein Verhältnis **T** der zwei charakteristischen Merkmale auszuführen;
- einen Vergleich zwischen dem Verhältnis **T** und durch Kalibrierung bestimmten Grenzwerten **T**₀ auszuführen;
- das Vorhandensein von Hydratkristallen oder das Vorhandensein von Eis ausgehend von dem Vergleich und von einem Vergleich zwischen der am Messpunkt durch die Messeinrichtung gemessenen Temperatur T und einer Temperatur der Bildung des Eises unter den Messbedingungen zu bestimmen.

2. Vorrichtung nach Anspruch 1, wobei die Erfassungsvorrichtung einen optischen Schalter (I) aufweist, der angeordnet ist, um die gefilterten Signale abwechselnd auf einen einzigen A.P.D.-Detektor zu leiten.

3. Vorrichtung nach einem der vorhergehenden Ansprüche, wobei der charakteristische Wert der Stärke der Signale oder einem direkt mit der Stärke verbundenen Wert entspricht, zum Beispiel das Integral des auf die Schwingungsformen zentrierten Spektrums.

4. Vorrichtung nach einem der vorhergehenden Ansprüche, wobei die Filter zwei um 640 nm und 650 nm herum zentrierte Bandpassfilter sind, um den Raman-Signalen der zwei Schwingungsformen der OH-Verbindungen zu entsprechen.

5. Vorrichtung nach einem der vorhergehenden Ansprüche, wobei die Vorrichtung Einstelleinrichtungen der Temperatur in der Nähe des Messpunkts aufweist.

6. Verwendung der Vorrichtung nach einem der vorhergehenden Ansprüche bei der Erfassung des Vorhandenseins von Hydraten oder von Eis in einem Produktionsabwasser, das von einer Gewinnung von Kohlenwasserstoffen stammt, bei der vorher ein Kalibrierungsvorgang der Vorrichtung ausgehend von einer für das Abwasser repräsentativen Probe ausgeführt wird.

7. Verwendung nach Anspruch 6, wobei die Kalibrierung für mindestens eine Temperatur ein Bezugsverhältnis **T**₀ bestimmt, um das Vorhandensein von festen Kristallen von Eis oder von Hydraten zu bestimmen.

8. Verwendung nach Anspruch 7, wobei das Vorhandensein von Hydratkristallen abgeleitet wird, wenn das Verhältnis **T** der charakteristischen Werte der gefilterten Signale höher als ein Kalibrierwert **T**₀ ist, und wenn die gemessene Temperatur höher als die Temperatur der Bildung des Eises Tf unter den Messbedingungen ist.

## Claims

1. Device for detecting the presence of gas hydrates or of ice in a medium containing water capable of forming solid crystals, **characterized in that** it comprises at least:
- one laser source (S1) placed to irradiate at least one measurement point in said medium,
- at least two bandpass filters (F1, F2) of preset characteristics, for extracting the light intensities corresponding to the Raman spectra of two vibrational modes of OH bonds, said filters being placed to intercept the signal reflected by said measurement point, said two vibrational modes of OH bonds having wave numbers located at 3160 cm⁻¹ ± 40 cm⁻¹. and at 3400 cm⁻¹ ± 150 cm⁻¹. respectively,
- at least one APD detector (D1, D2) for recording the two signals filtered by said bandpass filters (F1, F2),
- at least one means for measuring the temperature (T) at said measurement point,
- means for analysing whether hydrates are present or ice is present at said measurement point, said analysing means exploiting two characteristic values of said filtered signals, these values being combined with said temperature measurement to determine whether or not ice or hydrate crystals are present, said analysing means being configured to:
- calculate a ratio **T** of said two characteristic values;
- make a comparison between said ratio **T** and limiting values **T**₀ determined by calibration;
- determine whether hydrate crystals are present or ice is present on the basis of said comparison and a comparison between the temperature T measured at said measurement point by said measuring means and a temperature of formation of ice under the measurement conditions.

2. Device according to Claim 1, wherein the detecting device comprises an optical switch (I) placed to alternatively route said filtered signals to a single APD detector.

3. Device according to either of the preceding claims, wherein said characteristic value corresponds to the intensity of the signals, or to a value directly related to the intensity, to the integral of said spectrum centred on said vibrational modes for example.

4. Device according to one of the preceding claims, wherein said filters are two bandpass filters centred on 640 nm and 650 nm, in order to correspond to the Raman signals of said two vibrational modes of OH bonds.

5. Device according to one of the preceding claims, wherein said device comprises means for adjusting the temperature in the vicinity of said measurement point.

6. Use of the device according to one of the preceding claims to detect the presence of hydrates or of ice in a production effluent generated by a petroleum and/or natural gas extraction site, wherein an operation of calibrating said device using a sample representative of said effluent is carried out beforehand.

7. Use according to Claim 6, wherein the calibration determines, for at least one temperature, a reference ratio **T**₀ for detecting the presence of solid ice or hydrate crystals.

8. Use according to Claim 7, wherein the presence of hydrate crystals is deduced if the ratio **T** of said characteristic values of said filtered signals is higher than a calibration value **T**₀ and if the measured temperature is higher than the temperature Tf of formation of ice under the measurement conditions.
